# EUROPEAN PATENT APPLICATION

(11) **EP 4 462 276 A1**
(43) Date of publication of application: **13.11.2024**
(21) Application number: 22919771.0
(22) Date of filing: 30.06.2022
(51) Int. Cl.: G06F 16/2455

(54) **METHOD AND APPARATUS FOR GENERATING ASSOCIATION VIEWING MODEL, AND COMPUTER DEVICE AND STORAGE MEDIUM**

(30) Priority: 12.01.2022 CN 202210032396
(71) Applicant: China Nuclear Power Engineering Co., Ltd., Shenzhen, Guangdong 518124 (CN); CGN Power Co., Ltd., Shenzhen, Guangdong 518026 (CN); China General Nuclear Power Corporation, Shenzhen, Guangdong 518026 (CN)
(72) Inventor: CHEN, Hao, Shenzhen, Guangdong 518124 (CN); XIAO, Jin, Shenzhen, Guangdong 518124 (CN); LIU, Jinming, Shenzhen, Guangdong 518124 (CN); GONG, Bangxin, Shenzhen, Guangdong 518124 (CN)
(74) Representative: Westphal, Mussgnug & Partner, Patentanwälte mbB
(86) International application number: PCT/CN2022/103135
(87) International publication number: WO 2023/134134

(57) **Abstract**

Disclosed in the present invention are a method and apparatus for generating an association viewing model, The method comprising: acquiring a data object; calling a preset target character extraction script to perform an extraction operation for the data object, so as to obtain a target character code; Establishing an association relationship between the target character code and the data object, and then generating an association viewing model. By establishing an association between a coding object and various data objects, data query, analysis, and application can be greatly facilitated. All pieces of data of a certain coding object can be displayed in a unified manner, so as to intuitively understanding the problems of the coding object without the need for searching for the pieces of data in the system one by one thereby improving the data search efficiency. And a panoramic data view with the coding object as the center is formed, thereby providing a good tool and means for quickly analyzing and solving the problem,and improving the degree of structuring of data.

## Description

### TECHNICAL FIELD

The present invention relates to the field of computer technology, particularly to a method for generating an association viewing model, an apparatus for generating an association viewing model, a computer device, and a storage medium.

### BACKGROUND

A variety of business data will be generated in the process of nuclear power design and construction, comprising quality data, change data, experience feedback data, etc. When these data occur, the business department fills in corresponding information in relevant systems to form a problem ticket for follow-up management. In traditional approaches, the management of the problem ticket usually stores all the problem tickets uniformly, and does not manage the problem ticket effectively. All kinds of business data generated in the process of nuclear power design and construction have no associated object coding information, or the object coding information is incomplete, irregular, and poorly structured; It is difficult to carry out data integration and management, and it is not convenient for data query, analysis and application.

### SUMMARY OF THE INVENTION

In view of the above problems, the present invention proposes a method for generating an association viewing model, an apparatus for generating an association viewing model, a computer device, and a storage medium to overcome or at least partially solve the aforementioned problems.

The present invention discloses a method for generating an association viewing model, comprising:
Acquiring a data object;
Calling a preset target character extraction script to perform an extraction operation for the data object to obtain a target character code;
Establishing an association relationship between the target character code and the data object to generate an association viewing model.

Preferably, generation method of the preset target character extraction script is as follows:
Acquiring an entity object code;
Acquiring coding rule information based on the entity object code;
Generating a target character extraction script based on the coding rule information.

Preferably, the acquiring an entity object code comprises: extracting an entity object code from entity object data.

Preferably, the entity object data comprises device data, pipe data and structure data.

Preferably, the acquiring coding rule information based on the entity object code comprises:
Identifying and parsing strings for the entity object code to obtain coding rule information.

Preferably, the generating a target character extraction script based on the coding rule information comprises:
Generating a regular expression for string matching based on the coding rule information;
Defining the regular expression as the target character extraction script.

Preferably, the data object comprise 3D model data and/or file data and/or material data and/or plan data; the calling a preset target character extraction script to perform an extraction operation for the data object to obtain a target character code comprises:
Calling the target character extraction script to perform an extraction operation for 3D model data and/or file data and/or material data and/or plan data to a obtain target character code.

Preferably, the establishing an association relationship between the target character code and the data object to generate an association viewing model comprises:
Establishing an association relationship between the target character code and the 3D model data and/or file data and/or material data and/or plan data to generate the association viewing model.

The present invention also discloses a apparatus for generating an association viewing model, comprises:
A data object acquisition module for acquiring a data object;
An extraction operation module for calling a preset target character extraction script to perform an extraction operation for the data object to obtain a target character code;
An association relationship establishment module for establishing an association relationship between the target character code and the data object to generate an association viewing model.

Preferably, the apparatus further comprises:
An entity object code acquisition module for acquiring an entity object code;
A coding rule information acquisition module for acquiring coding rule information based on the entity object code;
A script generation module for generating a target character extraction script based on the coding rule information.

Preferably, the entity object code acquisition module comprises:

An entity object code extraction sub-module for extracting an entity object code from an entity object data.

Preferably, the coding rule information acquisition module comprises:
A coding rule information acquisition sub-module for identifying and parsing strings for the entity object code to acquire coding rule information.

Preferably, the script generation module comprises:
A regular expression generation sub-module for generating a regular expression for string matching based on the coding rule information;
A script definition sub-module for defining the regular expression as the target character extraction script.

The present invention further discloses a computer device comprising storage and a processor, wherein the storage stores a computer program, and the processor executes the computer program to implement the steps of the method for generating an association viewing model as described above.

The present invention also discloses a computer-readable storage medium storing a computer program, wherein the computer program, when executed by a processor, implements the steps of the method for generating an association viewing model as described above.

Advantages of the present invention comprise:
In the present invention, a data object is obtained; a preset target character extraction script is called to perform an extraction operation for the data object to obtain a target character code; an association relationship between the target character code and the data object is established to generate an association viewing model. By establishing an association relationship between a coded object and various data objects, data query, analysis, and application are greatly facilitated. All data of a certain coded object can be displayed in a unified manner, so as to intuitively understand the problems of the coded object without the need for searching for data in the system one by one, thereby improving the efficiency of data searching. A panoramic data view centered on coded objects is formed, providing a good tool and means for rapid analysis and resolution of problems, improving the degree of data structuring.

### BRIEF DESCRIPTION OF THE DRAWINGS

In order to further clarify the technical solution of the present invention, a brief introduction to the drawings required in the embodiments described below is provided. Obviously, the drawings described in the following embodiments are merely some embodiments of the present invention, and for ordinary technical personnel in this field, other drawings can be obtained based on these drawings without creative work.
Fig. 1 is a flowchart of steps of an embodiment of a method for generating an association viewing model according to the present invention;
Fig. 2 is a process schematic of steps for generating a target character extraction script according to the present invention;
Fig. 3 is a process schematic of steps for an entity object code extraction according to the present invention;
Fig. 4 is a process schematic of steps for coding rule information acquisition according to the present invention;
Fig. 5 is a process schematic of steps for defining a target character extraction script according to the present invention;
Fig. 6 is a process schematic of steps for acquiring target character code according to the present invention;
Fig. 7 is a process schematic of steps for generating an association viewing model according to the present invention;
Fig. 8 is an information viewing page of basic description information of an embodiment of an problem ticket according to the present invention;
Fig. 9 is a schematic diagram of extracted entity object information of the present invention;
Fig. 10 is a schematic view of an association relationship network according to the present invention;
Fig. 11 is a structural diagram of an embodiment of a apparatus for generating an association viewing model according to the present invention;
Fig. 12 is an internal structure diagram of an embodiment of a computer device according to the present invention.

### PREFERRED EMBODIMENTS

To make the technical problem solved by the present invention, the technical solution, and beneficial effects clearer, the following detailed description is provided in conjunction with the drawings and embodiments.

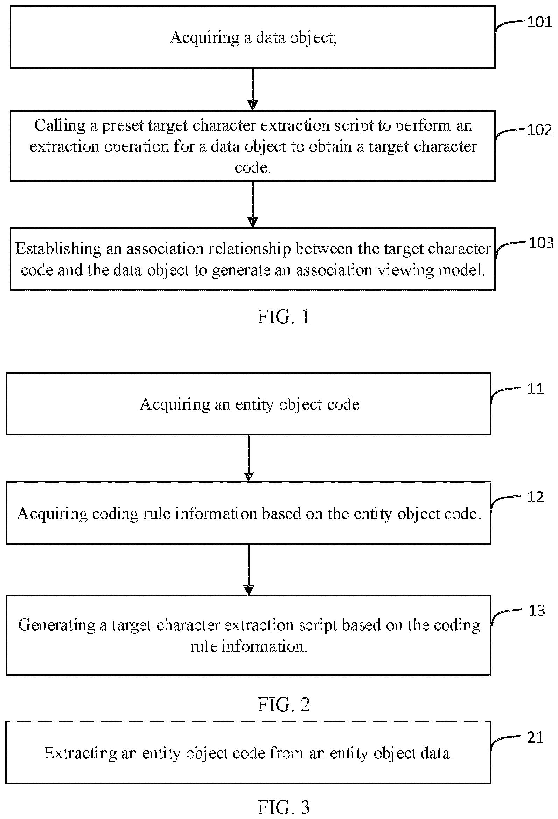

Referring to Fig. 1, a flowchart of steps of an embodiment of a method for generating an association viewing model of the present invention is illustrated, which may specifically comprise the following steps:

Step 101: Acquiring a data object.

In the present invention, the method for generating an association viewing model can be applied to a terminal or a server, or a system composed of a terminal connected to a server. Specifically, the terminal may be, but is not limited to be, various personal computer, laptop, smart phone, tablet, IoT device, and portable wearable device. The IoT device can be a smart speaker, a smart TV, a smart air conditioner, a smart in-vehicle device, etc. Portable wearable device can be a smart watch, a smart bracelet, a head-worn device, etc.

The server may be a standalone server or a server cluster composed of multiple servers. The terminal and the server can be connected via Ethernet for data transmission.

Initially, a data object can be obtained, and the data object may comprise various business data generated during the design and construction processes in a certain engineering field. For example, a data object can comprise various business data generated during the design and construction of nuclear power facilities, such as 3D model of device and building, process document, planning file, and material file. Specifically, the data object can be a circulating problem ticket, with the present invention not overly restricting the type of data object.

Step 102: Calling a preset target character extraction script to perform an extraction operation for a data object to obtain a target character code.

After acquiring one or more data objects, a preset target character extraction script can be called to perform an extraction operation for the data object to obtain a target character code. The target character extraction script can be pre-installed on a terminal or a server.

In one embodiment, as shown in Fig. 2, a process schematic of a method for generating a target character extraction script of the present invention is illustrated. The method for generating the target character extraction script comprises the following steps:

Step 11: Acquiring an entity object code.

Step 12: Acquiring coding rule information based on the entity object code.

Step 13: Generating a target character extraction script based on the coding rule information.

In the present invention, an entity object code can be obtained initially. Specifically, the entity object code can be extracted from an entity object data. It should be noted that the entity object data can comprise the core of business data integration and management in a certain engineering field, such as equipment, pipe and structure, etc. For example, the entity object data can be the core of the integration and management of nuclear power business data, comprising equipment, pipe and structure therein, and the invention does not overly restrict the types of the entity object data.

Furthermore, the entity object code can be parsed to obtain coding rule information. For example, if a device's character code is "3 APG 0001 PO-", after parsing, the coding rule information can be obtained as follows: the first digit is a number, indicating the unit number; The 2nd to 4th digits are letters, indicating the system number; The 5th to 8th are numbers, indicating serial numbers; The 8th to 10th digits are numbers/letters, indicating the object type code.

After acquiring the coding rule information, a regular expression for extracting an entity object code or object code fragment can be generated based on the coding rule information, thereby acquiring the target character extraction script. Running this target character extraction script extracts a target character code.

Step 103: Establishing an association relationship between the target character code and the data object to generate an association viewing model.

In practical applications of the present invention, after acquiring the target character code, the association relationship between the target character code and the data object can be established to generate the association viewing model. The association viewing model can be searched based on a target character code to obtain a corresponding data object and display it, thereby improving the efficiency of data retrieval.

Furthermore, the mapping relationship between an entity object code and a target character code is established, that is, the mapping relationship between an entity object data and a target character code is established. And then according to the correlation relationship between the target character code and the data object, the entity object data, the target character code and the data object are formed into a mapping relationship to generate an association relationship model of the three, so as to further improve the viewing convenience.

In the present invention, a data object is obtained; a preset target character extraction script is called to perform an extraction operation for the data object to obtain a target character code; an association relationship between the target character code and the data object is established to generate an association viewing model. By establishing an association relationship between a coded object and various data objects, data query, analysis, and application are greatly facilitated. All data of a certain coded object can be displayed in a unified manner, so as to intuitively understand the problems of the coded object without the need for searching for data in the system one by one, thereby improving the efficiency of data searching. A panoramic data view centered on coded objects is formed, providing a good tool and means for rapid analysis and resolution of problems, improving the degree of data structuring.

Referring to Fig. 3, a process schematic of steps for extracting an entity object code in the present invention is shown, comprising:

Step 21: Extracting an entity object code from an entity object data.

Specifically, an entity object code can be extracted from an entity object data. It should be noted that the entity object data comprises equipment data, pipe data, structure data and the like, and the present invention does not impose excessive restrictions on this. If the character code of a certain device is "3 APG 0001 PO-", the extracted entity object data is "device", and the entity object code is "3 APG 0001 PO-".

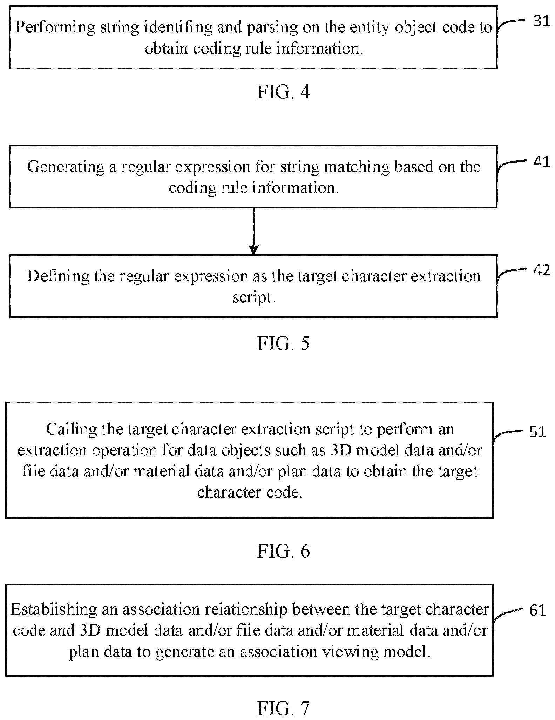

Referring to Fig. 4, a process schematic of steps for acquiring coding rule information in the invention is shown, comprising:

Step 31: Performing string identifying and parsing on the entity object code to obtain coding rule information.

Further, the character string is identified and parsed according to the entity object code, and the coding rule information is obtained. For example, if the entity object data is "device", and the entity object code is "3 APG 0001 PO-", after string identifying and parsing, the coding rule information obtained is as follows: the first digit is a number, indicating the unit number; the 2nd to 4th digits are letters, indicating the system number; the 5th to 8th are numbers, indicating serial numbers; the 8th to 10th digits are numbers/letters, indicating the object type code.

Referring to Fig. 5, a process schematic of steps for defining the target character extraction script in the invention is shown, comprises:

Step 41: Generating a regular expression for string matching based on the coding rule information.

Step 42: Defining the regular expression as the target character extraction script.

Specifically applied to the present invention, a regular expression for string matching is generated based on the coding rule information. The regular expression serves as a pattern for string matching that can check whether a specific string exists in a text and extract that specific string. The target character extraction script corresponding to the regular expression is defined. By constructing a regular expression, an entity object character code can be parsed and extracted.

Referring to Fig. 6, a process schematic of steps for acquiring the target character code in the invention is shown, the calling a preset target character extraction script to perform an extraction operation for the data object to obtain a target character code comprises:

Step51: calling the target character extraction script to perform an extraction operation for data objects such as 3D model data and/or file data and/or material data and/or plan data to obtain the target character code.

In the present invention, the data object comprises 3D model data and/or file data and/or material data and/or plan data; the target character extraction script can be called to perform an extraction operation for 3D model data and/or file data and/or material data and/or plan data to obtain the target character code.

Referring to Fig. 7, a process schematic of steps for generating an association viewing model in the invention is shown, comprises:

Step 61: Establishing an association relationship between the target character code and 3D model data and/or file data and/or material data and/or plan data to generate an association viewing model.

Furthermore, after acquiring one or more data objects corresponding to the target character code, the association relationship between the target character code and 3D model data and/or file data and/or material data and/or plan data can be established to generate an association viewing model. Establishing relationship between the target object code and data such as problem ticket, 3D model and file to form a unified data view centered on an entity object.

By establishing the association relationship between the entity object and the data object, data query, analysis and application can be greatly facilitated; and all data objects of the entity object can be uniformly displayed without searching from the system, so that the searching efficiency is improved.

To facilitate better understanding by those skilled in the art, the following specific example is provided:

Taking various business data generated during the design and construction of nuclear power facilities as an example for illustration, when business data changes, the relevant system can receive input corresponding information to form a problem ticket. The specific method steps for generating an association viewing model of the present invention are as follows:

S1: Defining an entity object class to be associated.

The entity object class (i.e., entity object data) is the core of integration and management of nuclear power business data, generally comprising device data, pipe data and structure data. etc.

S2: Summarizing and analyzing the character code of the entity object class (i.e., entity object code) to obtain coding rule information.

Where the character code refers to a string used for uniquely identify an entity object. The character code is usually composed of a combination of numbers and letters according to certain rules. For example, if the character code of a device is "3 APG 0001 PO-", After parsing, the coding rule information can be obtained as follows: the first digit is a number, indicating the unit number; the 2nd to 4th digits are letters, indicating the system number; the 5th to 8th digits are numbers, indicating the serial number; the 8th to 10th digits are numbers/letters, indicating the object type code.

S3: Based on the coding rule of the entity object, generating a code script (i.e., target character extraction script) for extracting object code or object code fragment.

Where the code script can be expressed in a regular expression. The regular expression is a pattern for string matching that can be used for check whether a specific string exists in a text and extract the specific string.

S4: Based on the code script, parsing and extracting the target character code (or fragment) conforming to the coding rule information from the title, description and other information of the business problem ticket, and combine and standardize them.

Among them, in the text information of the title item, solution, and reason analysis item of the problem ticket, the target character code (fragment) that comply with the coding rule information are extracted through regular expressions in the code script until all target character codes (fragments) in the problem ticket are extracted. If necessary, they are combined and arranged according to the object coding rule.

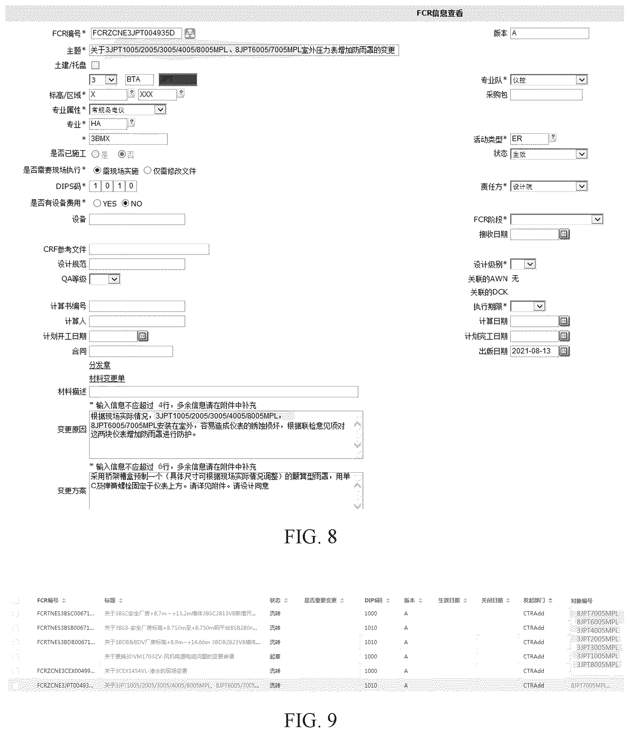

As shown in Fig. 8 and Fig. 9, Fig. 8 shows the information viewing page of the FCR (Basic Description Information) of the problem ticket, and Fig. 9 shows the extracted entity object information of the FCR. That is, the unique codes of 7 objects such as 3JPT1005MPL and 3JPT2005MPL generated by the FCR are parsed and extracted to establish the association relationship between the FCR and the 7 entity objects. Users can quickly find the FCR information through any entity object.

S5: Associating the target object with all the problem tickets containing the target character code, the association relationship network between the entity object and all the problem tickets (i.e., the association viewing model) can be obtained.

Similarly, we can parse and extract object code information from data such as 3D model, file, material, and plan to establish relationships between this data and an entity object.

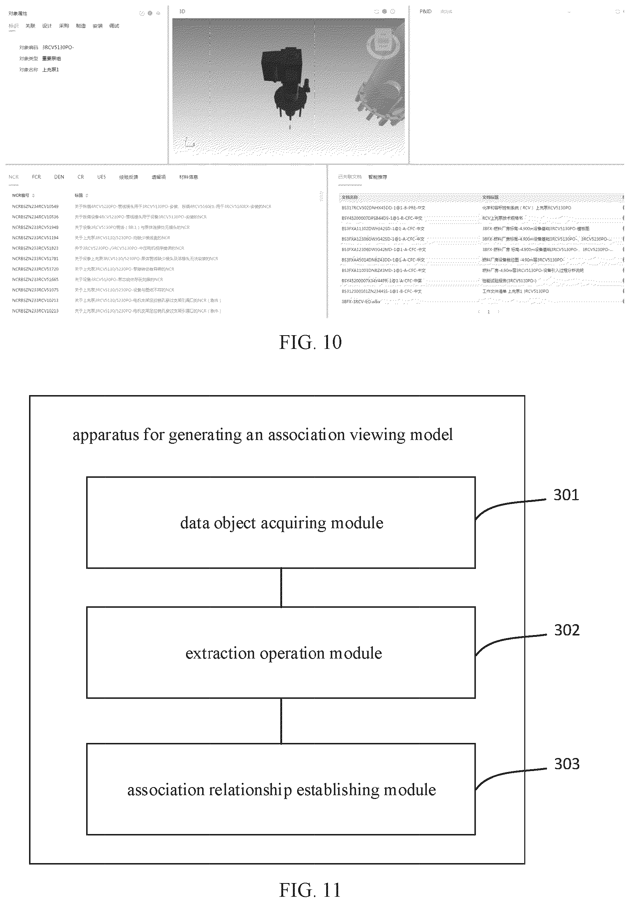

S6: When there is a need to view information such as the problem ticket, 3D model, and file associated with the entity object, it can be quickly called and viewed by relying on the established association network, as shown in Figure 10.

In this way, when a problem needs to be analyzed and solved (the problem generally revolves around one or several entity objects), you can quickly view relevant data, models, files, historical problem records, etc. By relying on the object panoramic data map shown in the above figure, so as to avoid searching for relevant information in different business systems.

It should be noted that, for simplicity of description, the method embodiments are described as a series of combinations of acts, but those skilled in the art will appreciate that the present invention is not limited by the order of the acts described, as certain steps may be performed in other orders or simultaneously in accordance with the present invention. Second, those skilled in the art should also be aware that the embodiments described in the specification are all preferred embodiments, and the acts involved are not necessarily required for the present invention.

Referring to Fig. 11, a structural block diagram of an embodiment of an apparatus for generating an association viewing model according to the present invention is shown, which may specifically comprise the following modules:
A data object acquisition module 301, used for acquiring a data object;
An extraction operation module 302, used for calling a preset target character extraction script to perform an extraction operation on a data object to obtain a target character code;
An association relationship establishing module 303, used for establishing an association relationship between the target character code and the data object, and generate an association viewing model.

Preferably, the device further comprises:
An entity object code acquisition module, used for acquiring an entity object code;
A coding rule information acquisition module, used for acquiring coding rule information according to the entity object code;
A script generation module, use for generating a target character extraction script accord to the coding rule information.

Preferably, the entity object code acquisition module comprises: An entity object code extraction sub-module, used for extracting an entity object code from an entity object data.

Preferably, the entity object data comprises device data, pipe data, and construction data.

Preferably, the coding rule information acquisition module comprises a coding rule information acquisition sub-module, used for identifying and parsing character strings for the entity object code to obtain coding rule information.

Preferably, the script generation module comprises:
A regular expression generation sub-module, used for generating a regular expression for string matching according to the coding rule information;
A script definition sub-module, used for defining the regular expression as a target character extraction script.

Preferably, the data object comprises 3D model data and/or file data and/or material data and/or plan data; and the extraction operation module comprises an extraction operation sub-module which is used for calling the target character extraction script to carry out extraction operation on the 3D model data and/or the file data and/or the material data and/or the plan data to obtain a target character code.

Preferably, the association relationship establishing module comprises: an association relationship establishing sub-module, used for establishing an association relationship between the target character code and the 3D model data and/or the document data and/or the material data and/or the plan data, and generate an association viewing model.

All or part of the modules in the apparatus for generating the association viewing model may be implemented by software, hardware, or a combination thereof. The above modules can be embedded in or independent of the processor in the computer device in the form of hardware, and can also be stored in the storage in the computer device in the form of software, so that the processor can call and execute the corresponding operations of the above modules.

The apparatus for generating an association viewing model provided above may be used for executing the method for generating an association viewing model provided in any of the above embodiments, and has corresponding functions and beneficial effects.

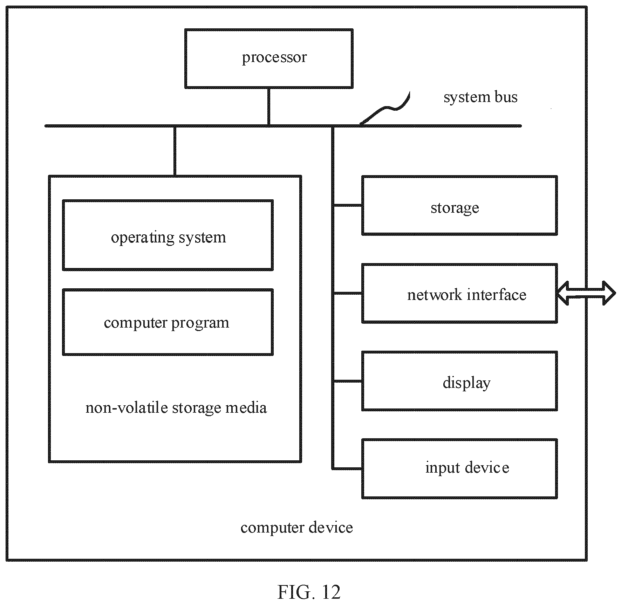

In one embodiment, a computer device is provided. The computer device can be a terminal or server, whose internal structure can be as shown in Fig. 12. The computer device comprises a processor, storage, network interface, display, and input device connected via a system bus. The processor of the computer device provides computing and control capabilities. The storage of the computer device comprises non-volatile storage media and internal storage. The non-volatile storage media stores the operating system and computer programs. The internal storage provides an environment for running the operating system and computer programs stored in the non-volatile storage media. The network interface of the computer device is used for communicating with external terminals through network connections. When the processor executes the computer program, a method of generating an association viewing model is implemented. The display screen of the computer device can be a liquid crystal display or an e-ink display. The input device of the computer device can be a touch layer overlaid on the display screen, or a key, a trackball, or a touchpad arranged on the shell of the computer device, or an external keyboard, touchpad, or mouse.

It can be understood by those skilled in the art, the structure shown in fig. 12 is only a block diagram of a part of the structure related to the solution of the present application, and does not constitute a limitation on the computer device to which the solution of the present application is applied. A specific computer device may comprise more or less components than those shown in the figure, or combine some components, or have a different arrangement of components.

In one embodiment, a computer device is provided; comprising a memory and a processor, wherein a computer program is stored, and the processor executes the steps of the embodiments of Figures 1 to 6 when executing the computer program.

In one embodiment, a computer-readable storage medium is provided on which a computer program is stored. When the computer program is executed by a processor, the steps of the embodiments shown in Figs 1 to 6 are implemented..

Each embodiment in this specification is described in a progressive manner, and each embodiment focuses on the differences from other embodiments, and the same and similar parts of each embodiment can be referred to each other.

As will be appreciated by one of skill in the art, embodiments of the present invention may be provided as a method, apparatus, or computer program product. Accordingly, the present invention may take the form of an entirely hardware embodiment, an entirely software embodiment or an embodiment combining software and hardware aspects. Furthermore, the present invention may take the form of a computer program product embodied in one or more computer-usable storage media (comprising, but not limited to, disk storage, CD-ROM, optical storage, etc.) Having computer-usable program code embodied therein.

The present invention is described with reference to flowcharts and/or block diagrams illustrating methods, terminal devices (systems), and computer program products according to the present invention. It should be understood that each process and/or block in the flowcharts and/or block diagrams can be implemented by computer program instructions, and combinations of processes and/or blocks in the flowcharts and/or block diagrams. These computer program instructions can be provided to a general computer, specialized computer, embedded processor, or other programmable data processing terminal device's processor to create a machine that executes instructions provided by a computer or other programmable data processing terminal device's processor to implement a function specified by one or more processes in the flowcharts or one or more blocks in the block diagrams.

These computer program instructions can also be stored in a computer-readable storage that boots a computer or other programmable data processing terminal device to work in a specific manner, such that the instructions stored in the computer-readable storage create an apparatus comprising instructions for implementing a step specified by one or more processes in the flowcharts or one or more blocks in the block diagrams.

The computer program instructions may also be loaded onto a computer or other programmable data processing terminal to cause a series of operational steps to be performed on the computer or other programmable terminal to produce a computer implemented process Uch that the instructions which execute on the computer or other programmable terminal device provide steps for implementing the functions specified in the flowchart flow or flows and/or block diagram block or blocks.

Although preferred embodiments of the present invention have been described, those skilled in the art will recognize that changes and modifications can be made to these embodiments once the basic inventive concept is understood. Therefore, the appended claims are intended to cover all such changes and modifications that fall within the scope of the present invention.

Finally, it should also be noted that in this document, relational terms such as "first" and "second" are used merely to distinguish one entity or operation from another, without necessarily requiring or implying any actual relationship or order between these entities or operations. Furthermore, terms such as "comprising," "comprising," or any other variants thereof are intended to encompass non-exclusive inclusion, so that processes, methods, items, or terminal devices comprising a series of elements comprise not only those elements explicitly listed but also other elements not explicitly listed, or also comprise elements inherent to such processes, methods, items, or terminal devices without more restrictions.

The above detailed description has provided an introduction to a method for generating an association viewing model, an apparatus for generating an association viewing model, a computer device, and a storage medium according to the present invention. Specific examples have been used for illustrating the principles and embodiments of the present invention. The description of these embodiments is only intended to assist in understanding the methods and core concepts of the present invention. For general technical personnel in this field, changes may be made in specific embodiments and applications based on the principles of the present invention. In conclusion, the content of this specification should not be construed as limiting the present invention.

## Claims

1. A method for generating an association viewing model, wherein the method comprises:
acquiring a data object;
calling a preset target character extraction script to perform an extraction operation for the data object to obtain a target character code;
establishing an association relationship between the target character code and the data object to generate an association viewing model.

2. The method according to claim 1, wherein the generation method of the preset target character extraction script comprises:
acquiring an entity object code;
acquiring coding rule information based on the entity object code;
generating a target character extraction script based on the coding rule information.

3. The method according to claim 1, wherein the acquiring an entity object code comprises extracting an entity object code from entity object data.

4. The method according to claim 3, wherein the entity object data comprises device data, pipe data, and structure data.

5. The method according to claim 2, wherein the acquiring coding rule information based on the entity object code comprises: identifying and parsing strings for the entity object code to obtain coding rule information.

6. The method according to claim 2, wherein the generating a target character extraction script based on the coding rule information comprises:
generating a regular expression for string matching based on the coding rule information and defining the regular expression as the target character extraction script.

7. The method according to claim 2, wherein the data object comprises 3D model data and/or file data and/or material data and/or plan data, and the calling a preset target character extraction script to perform an extraction operation for the data object to obtain a target character code comprises:
calling the target character extraction script to perform an extraction operation for 3D model data and/or file data and/or material data and/or plan data to obtain the target character code.

8. The method according to claim 7, wherein the establishing an association relationship between the target character code and the data object to generate an association viewing model comprises:
establishing an association relationship between the target character code and the 3D model data and/or file data and/or material data and/or plan data to generate the association viewing model.

9. An apparatus for generating an association viewing model, wherein comprises:
a data object acquisition module for acquiring a data object;
an extraction operation module for calling a preset target character extraction script to perform an extraction operation for the data object to obtain a target character code;
an association relationship establishment module for establishing an association relationship between the target character code and the data object to generate the association viewing model.

10. The apparatus according to claim 9, wherein the apparatus further comprises:
an entity object code acquisition module for acquiring an entity object code;
a coding rule information acquisition module for acquiring coding rule information based on the entity object code;
a script generation module for generating a target character extraction script based on the coding rule information.

11. The apparatus according to claim 10, wherein the entity object code acquisition module comprises:
an entity object code extraction sub-module for extracting an entity object code from an entity object data.

12. The apparatus according to claim 11, wherein the entity object data comprises device data, pipe data, and structure data.

13. The apparatus according to claim 10, wherein the coding rule information acquisition module comprises:
an coding rule information acquisition sub-module for identifying and parsing character strings for the entity object code to acquire the coding rule information.

14. The apparatus according to claim 10, wherein the script generation module comprises:
a regular expression generation sub-module for generating a regular expression for string matching based on the coding rule information;
a script definition sub-module for defining the regular expression as the target character extraction script.

15. A computer device, comprising a storage and a processor, wherein the storage storing a computer program, which when executed by the processor, implements the steps of the method for generating an association viewing model according to any one of claims 1 to 8.

16. A computer-readable storage medium storing a computer program, wherein the computer program being executed by a processor to implement the steps of the method for generating an association viewing model according to any one of claims 1 to 8.
